# EUROPÄISCHE PATENTSCHRIFT

(11) **EP 3 642 912 B1**
(45) Veröffentlichungstag und Bekanntmachung des Hinweises auf die Patenterteilung: **07.04.2021**
(21) Anmeldenummer: 18735197.8
(22) Anmeldetag: 14.06.2018
(51) Int. Cl.: H01S 3/10, H01S 3/13, H01S 3/23, H01S 3/00

(54) **VERFAHREN UND LASERSYSTEM ZUM ERZEUGEN VERSTÄRKTER PULSE-ON-DEMAND-AUSGANGSLASERPULSE**
METHOD AND LASER SYSTEM FOR GENERATING AMPLIFIED PULSE-ON-DEMAND OUTPUT LASER PULSES
PROCÉDÉ ET SYSTÈME LASER SERVANT À GÉNÉRER DES IMPULSIONS LASER DE SORTIE AMPLIFIÉES À LA DEMANDE

(30) Priorität: 20.06.2017 DE 102017210272
(43) Veröffentlichungstag der Anmeldung: 29.04.2020
(73) Patentinhaber: TRUMPF Laser GmbH, 78713 Schramberg (DE)
(72) Erfinder: FLAIG, Rainer, 78664 Eschbronn (DE); RAPP, Stefan, 78713 Schramberg (DE); STIER, Fred, 78713 Schramberg (DE)
(74) Vertreter: Kohler Schmid Möbus Patentanwälte
(86) Internationale Anmeldenummer: PCT/EP2018/065872
(87) Internationale Veröffentlichungsnummer: WO 2018/234162

(56) Entgegenhaltungen:
- DE-A1-102014 017 568
- US-A1- 2014 050 235
- US-B1- 9 570 877

## Beschreibung

Die Erfindung betrifft ein Verfahren zum Erzeugen verstärkter Ausgangslaserpulse mit individuell vorgegebenen Pulsenergien zu individuell vorgegebenen Zeitpunkten an einem Ausgang gemäß dem Oberbegriff von Anspruch 1, sowie auch ein zum Durchführen des Verfahrens geeignetes Lasersystem und ein zugehöriges Steuerungsprogrammprodukt.

Ein derartiges Verfahren ist beispielsweise durch die DE 10 2014 017 568 A1 bekannt geworden.

Bekannte Kurzpulslasersysteme (fs..ps Pulsdauern) haben eine taktratenabhängige Laserpulsenergie bei konstanter Pumpleistung und werden in der Regel mit konstanter Frequenz betrieben. Der Anwender möchte die Laserpulse mit freiwählbarer Triggerung (ns-Jitter) und konstanter einstellbarer Pulsenergie betreiben (Pulse on Demand = POD).

Aus der DE 10 2014 017 568 A1 ist ein Verfahren zum Erzeugen verstärkter Ausgangslaserpulse zu individuell vorgegebenen Zeitpunkten bekannt, die durch freies Triggern mittels eines Pulspickers erzielt werden. Der Pulspicker besteht aus einem Modulator und einem Treiber, mit denen mindestens 3 Niveaus für unterschiedliche Pulsamplituden nach dem Pulspicker gemäß einer Vorgabe eingestellt werden können. Als Modulator wird vorzugsweise ein elektrooptischer Modulator oder ein akkustooptischer Modulator verwendet.

Daher liegt der vorliegenden Erfindung die Aufgabe zugrunde, ein alternatives energiestabilisiertes POD(Pulse on Demand)-Verfahren zum Erzeugen verstärkter Ausgangslaserpulse mit individuell vorgegebenen Pulsenergien zu individuell vorgegebenen Zeitpunkten sowie ein zugehöriges Lasersystem anzugeben.

Diese Aufgabe wird bei dem eingangs genannten Verfahren erfindungsgemäß dadurch gelöst, dass das Reduzieren der Pulsenergien der verstärkten Eingangslaserpulse durch zeitgesteuertes Teilauskoppeln in Abhängigkeit ihrer Pulsabstände zum jeweils unmittelbar vorhergehenden, verstärkten Eingangs- oder Opferlaserpuls erfolgt.

Vorzugsweise weisen alle verstärkten Ausgangslaserpulse die gleiche Pulsenergie auf.

Die Erfindung beruht auf der Tatsache, dass nach einem Puls die Inversion im Verstärkungsmedium des Verstärkers erst wieder aufgebaut werden muss, um eine Puls-zu-Puls-Stabilität zu gewährleisten. Außerdem wird bei zu langen Pulspausen die Verstärkung so groß, dass sich Pulsüberhöhungen einstellen.

Wesentliche Bausteine der Erfindung sind Lasertaktaufbereitung und Pulsenergiekorrektur.

Die Lasertaktaufbereitung hat die Aufgabe, den Grundtakt in einem für das Lasersystem sicheren Frequenzbereich zu halten und Pulsanforderungen (Pulstriggerungen) durch den Anwender ns-genau "einzutakten". Zum anderen wird geschaut, ob die Pulsanforderung außerhalb eines vorgegebenen Zeitfensters liegt, welches durch das Verhalten des Verstärkungsmediums gegeben ist. Ist der Pulsabstand zu lang, wird ein Zwischenpuls (Opferpuls) eingefügt, der dann auf einen Absorber gelenkt wird.

Die Pulsenergiekorrektur der verstärkten Ausgangspulse auf die vorgegebenen Pulsenergien erfolgt durch zeitgesteuertes Teilauskoppeln der verstärkten Ausgangspulse in Abhängigkeit ihrer bekannten Pulsabstände zum jeweils unmittelbar vorhergehenden, verstärkten Eingangs- oder Opferlaserpuls. Je größer dieser Pulsabstand eines verstärkten Eingangslaserpulses ist, desto größer ist die im Verstärker aufgebaute Inversion und desto größer ist die Pulsenergie des verstärkten Eingangslaserpulses. In Abhängigkeit des bekannten Pulsabstandes zum jeweils unmittelbar vorhergehenden, verstärkten Eingangs- oder Opferlaserpuls wird ein entsprechender Teil der verstärkten Ausgangslaserpulse ausgekoppelt, um Ausgangslaserpulse mit der vorgegebenen Pulsenergie zu erhalten.

Das erfindungsgemäße Verfahren funktioniert allein durch die gezielte zeitliche Ansteuerung der ausgewählten Eingangspulse und der Auskopplung der verstärkten Eingangspulse. Dieses Vorgehen ist schneller als eine Pulsenergie-Regelung der Ausgangslaserpulse. Bevorzugt wird mit konstanter Pumpleistung für den Verstärker gearbeitet, so dass ein hohes thermisches Gleichgewicht und eine zeitlich nahezu konstante thermische Linse erreicht werden und dadurch die Funktion der optischen Komponenten verbessert wird.

Vorzugsweise wird für die ausgewählten Eingangslaserpulse die zu erwartende Pulsenergie der verstärkten Ausgangslaserpulse im Voraus bestimmt und die Teilauskopplung anhand eines Vergleichs der zu erwartenden Pulsenergie und der vorgegebenen Pulsenergie gesteuert. Beispielsweise kann die erwartete Pulsenergie aus dem simulierten Verhalten des Verstärkers in Abhängigkeit von Pulsabstand und Pulsenergie der ausgewählten Eingangslaserpulse und der Pumpleistung des Verstärkers bestimmt werden. Diese Simulation kann über ein nicht-lineares Modell erfolgen, welches eine Funktion vom Pulsabstand, von der Pulsenergie der ausgewählten Eingangslaserpulse, von der Leistung der zu verstärkenden Pulse und der Pumpleistung ist.

Sofern der zeitliche Pulsabstand eines ausgewählten Eingangslaserpulses zu dem unmittelbar vorhergehenden, ausgewählten Eingangslaserpuls kleiner als die Mindestzeitspanne ist, wird bevorzugt stattdessen ein anderer Eingangslaserpuls ausgewählt, dessen zeitlicher Pulsabstand zu dem unmittelbar vorhergehenden, ausgewählten Eingangslaserpuls gleich oder nächstkommend größer als die Mindestzeitspanne ist. Beispielsweise kann dem eigentlichen Auswahlsignal ein Verzögerungssignal überlagert und ein Eingangslaserpuls ausgewählt werden, dessen zeitlicher Pulsabstand gleich oder nächstkommend größer als die Mindestzeitspanne ist. Vorzugsweise werden alle die Eingangslaserpulse auswählenden Triggersignale mit einer Verzögerung beaufschlagt, so dass die Mindestzeitspan-ne für alle Triggersignale eingehalten wird und ggf. Opferpulse eingeführt werden können. D.h., alle ausgewählten Eingangslaserpulse sind mit einem festen Delay beaufschlagt. Die Mindestzeitspanne ist mindestens so lang, dass eine Bewertung, ob Opferpulse erforderlich sind, durchgeführt werden kann.

Als Opferlaserpuls kann einer der Eingangslaserpulse oder alternativ ein Fremdlaserpuls, der insbesondere eine andere Wellenlänge als die Wellenlänge der Eingangslaserpulse aufweist, in die Pulsfolge der ausgewählten Eingangslaserpulse eingefügt werden.

Vorzugsweise ist der zeitliche Pulsabstand zwischen zwei benachbarten Ausgangslaserpulsen um mindestens eine Größenordnung größer als der zeitliche Pulsabstand der Eingangslaserpulse. Die Taktfrequenz der Eingangslaserpulse liegt beispielsweise im Frequenzbereich von z.B 10 MHz bis 200 MHz.

Um Überhöhungen am ersten Ausgangslaserpuls einer angeforderten Pulsfolge zu verhindern, kann vorteilhaft vor dem ersten ausgewählten Eingangslaserpuls mindestens ein Opferlaserpuls in die Pulsfolge der ausgewählten Eingangslaserpulse eingefügt werden.

Das Reduzieren der Pulsenergien der verstärkten Eingangslaserpulse und das Auskoppeln des verstärkten Opferlaserpulses können entweder an unterschied-lichen Auskoppeleinheiten oder, was bevorzugt ist, an derselben Auskoppeleinheit erfolgen.

Die Erfindung betrifft auch ein Lasersystem zum Erzeugen verstärkter Ausgangslaserpulse mit individuell vorgegebenen Pulsenergien zu individuell vorgegebenen Zeitpunkten an einem Ausgang mit den Merkmalen von Anspruch 11.

Vorzugsweise weist das Lasersystem eine Fremdpulsquelle (z.B. eine gepulste Diode, eine cw Diode mit optischem Schalter (z.B. AOM) oder eine Diode mit Faserverstärker), insbesondere mit einer anderen Wellenlänge als die Pulsquelle, zum Erzeugen eines in die Pulsfolge der ausgewählten Eingangslaserpulse einzufügenden Opferpulses auf. Im Fall einer Fremdpulsquelle kann der Auskoppeleinheit ein wellenlängenselektives Element (z.B. dichroitischer Spiegel, diffraktives Element, VBG[Volume Bragg Grating]) zum Auskoppeln des Opferpulses vorgeordnet oder nachgeordnet sein. Besonders bevorzugt weisen die Auswahl- und Auskoppeleinheiten jeweils einen akusto-optischen Modulator (AOM) oder einen elektro-optischen Modulator (EOM) auf.

Die Erfindung betrifft schließlich auch ein Steuerungsprogrammprodukt, welches Codemittel aufweist, die zum Durchführen aller Schritte des oben beschriebenen Verfahrens angepasst sind, wenn das Programm auf einer Steuereinheit eines Lasersystems abläuft.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine erste Ausführungsform eines erfindungsgemäßen Lasersystems zum Erzeugen identischer, verstärkter Ausgangslaserpulse; und
- Fig. 2: schematisch eine zweite Ausführungsform eines erfindungsgemäßen Lasersystems zum Erzeugen identischer, verstärkter Ausgangslaserpulse.

In der folgenden Beschreibung der Zeichnung werden für gleiche bzw. funktionsgleiche Bauteile identische Bezugszeichen verwendet.

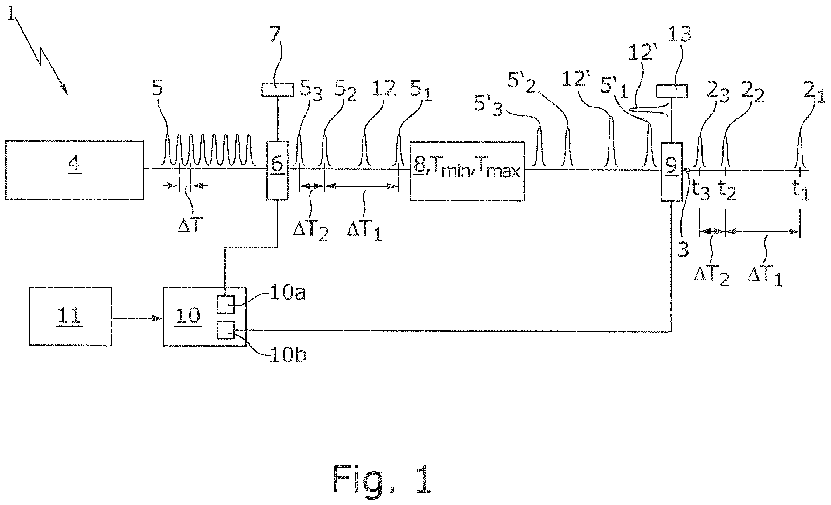

Das in **Fig. 1** gezeigte Lasersystem **1** dient zum Erzeugen mehrerer (hier lediglich beispielhaft dreier) verstärkter Ausgangslaserpulse **2₁, 2₂, 2₃** mit individuell vorgegebenen Pulsenergien zu individuell vorgegebenen Zeitpunkten (Pulse on Demand = POD) an einem Ausgang **3.**

Das Lasersystem 1 umfasst eine Pulsquelle **4** zum Bereitstellen einer Pulsfolge von Eingangslaserpulsen **5** mit der gleichen Pulsenergie und dem gleichen zeitlichen Pulsabstand **Δt,** welcher um Größenordnungen kleiner ist als der zeitliche Pulsabstand **ΔT**₁, **ΔT₂** zwischen zwei benachbarten Ausgangslaserpulsen 2₁, 2₂, 2₃. Die Taktfrequenz der Eingangslaserpulse 5 ist fest eingestellt und liegt in einem Frequenzbereich von z.B.10 MHz bis 200 MHz. Es können auch andere gepulste Quelle zum Einsatz kommen, welche keine äquidistanten Pulse erzeugen, beispielsweise ps-Laserdioden.

Das Lasersystem 1 umfasst eine optische Auswahleinrichtung (Pulspicker) **6,** z.B. in Form eines eingangsseitigen AOM (akusto-optischer Modulator) oder EOM (elektro-optischer Modulator), zum gezielten Auswählen bzw. Durchlassen einiger der Eingangslaserpulse 5. Die ausgewählten Eingangslaserpulse **5₁, 5₂, 5₃** werden vom Pulspicker 6 unabgelenkt durchgelassen, während die nicht ausgewählten Eingangslaserpulse 5 ausgekoppelt und auf einen Absorber **7** gelenkt werden.

Das Lasersystem 1 umfasst weiterhin einen optischen Verstärker **8** zum Verstärken der ausgewählten Eingangslaserpulse 5₁, 5₂, 5₃, sowie eine optische Auskoppeleinheit (Auskoppler) **9,** z.B. in Form eines ausgangsseitigen AOM oder EOM, zum Reduzieren der Pulsenergien der verstärkten Eingangslaserpulse **5₁', 5₂', 5₃'** auf jeweils vorgegebene Pulsenergien durch gezieltes Teilauskoppeln der verstärkten Eingangslaserpulse 5₁', 5₂', 5₃'. Dabei weist der Verstärker 8 eine verstärkungsfreie Mindestzeitspanne **Tₘᵢₙ,** die durch den für eine Mindestverstärkung im optischen Verstärker 8 erforderlichen Inversionsaufbau vorgegeben ist, und eine Höchstzeitspanne **Tₘₐₓ,** die durch den für eine Höchstverstärkung im optischen Verstärker 8 erforderlichen Inversionsaufbau vorgegeben ist, auf. Die Mindestzeitspanne Tₘᵢₙ beruht auf der Tatsache, dass nach einer Pulsverstärkung die Inversion im Verstärkungsmedium des Verstärkers 8 erst wieder aufgebaut werden muss, um eine Puls-zu-Puls-Stabilität zu gewährleisten. Die Höchstzeitspanne Tₘₐₓ verhindert zu lange Pulspausen und somit zu große Verstärkungen, die zu unerwünschten Pulsüberhöhungen führen. Die verstärkten Eingangslaserpulse 5₁', 5₂', 5₃' kommen am Ausgang 3 zu den Zeitpunkten **t₁, t₂, t₃** als verstärkte Ausgangslaserpulse 2₁, 2₂, 2₃ an.

Das Lasersystem 1 umfasst ferner eine Steuereinheit **10,** die den Pulspicker 6 und den Auskoppler 9 entsprechend einer Anwenderanforderung **11,** welche am Ausgang 3 zu individuell einstellbaren Zeitpunkten verstärkte Ausgangslaserpulse mit individuell einstellbarer Pulsenergie anfordert, zeitlich ansteuert. Die Steuereinheit 10 kann auch die Pumpleistung des Verstärkers 8 steuern, welche konstant sein soll.

Im Folgenden wird die Funktionsweise des Lasersystems 1 für den Fall beschrieben, dass von der Anwenderanforderung 11 drei verstärkte Ausgangslaserpulse 2₁, 2₂, 2₃ mit der gleichen Pulsenergie zu den Zeitpunkten t₁, t₂, t₃ am Ausgang 3 angefordert werden. Dabei sei angenommen, dass der zeitliche Pulsabstand AT₁ zwischen dem ersten und dem zweiten Ausgangslaserpuls 2₁, 2₂ größer als die Höchstzeitspanne Tₘₐₓ ist und dass der zeitliche Pulsabstand ΔT₂ zwischen dem zweiten und dem dritten Ausgangslaserpuls 2₂, 2₃ kleiner als die Höchstzeitspanne Tₘₐₓ, aber größer als die Mindestzeitspanne Tₘᵢₙ ist.

Die Steuereinheit 10 steuert den Pulspicker 6 zeitlich derart an, dass aus den Eingangslaserpulsen 5 nur diejenigen drei durchgelassen werden, die am Ausgang 3 zu den jeweils angeforderten Zeitpunkten t₁, t₂, t₃ ankommen. Alle anderen Eingangslaserpulse 5 werden vom Pulspicker 6 auf den Absorber 7 gelenkt.

Da der Pulsabstand ΔT₁ zwischen dem ersten und dem zweiten zu verstärkenden Eingangslaserpuls 5₁, 5₂ größer als die Höchstzeitspanne Tₘₐₓ ist, wird von der Steuereinheit 10 in die Pulsfolge der ausgewählten Eingangslaserpulse 5₁, 5₂, 5₃ vor dem zweiten zu verstärkenden Eingangslaserpulse 5₂ ein Opferlaserpuls **12** eingefügt, der von dem zweiten zu verstärkenden Eingangspuls 5₂ um mindestens die Mindestzeitspanne Tₘᵢₙ und um höchstens die Höchstzeitspanne Tₘₐₓ beabstandet ist. Dazu wird der Pulspicker 6 von der Steuereinheit 10 zeitlich angesteuert, um einen weiteren der Eingangslaserpulse 5 als Opferlaserpuls 12 durchzulassen.

Die drei ausgewählten Eingangslaserpulse 5₁, 5₂, 5₃ und der Opferpuls 12 werden mittels des optischen Verstärkers 8 zu den verstärkten Laserpulsen 5₁', 5₂', 5₃' **12'** verstärkt. Sofern sein Pulsabstand zum vorhergehenden Puls größer als die Höchstzeitspanne Tₘₐₓ ist, ist der verstärkte Opferlaserpuls 12', wie in Fig. 1 gezeigt, größer als die Pulse 5₁', 5₂', 5₃', da er eine größere Verstärkung erfährt. Der Auskoppler 9 wird von der Steuereinheit 10 zeitlich derart angesteuert, dass der verstärkte Opferlaserpuls 12' ausgekoppelt und auf einen Absorber **13** gelenkt wird und dass alle drei verstärkten Eingangslaserpulse 5'₁, 5'₂, 5'₃ auf die gleiche Pulsenergie reduziert werden. Diese Energiereduzierung erfolgt am Auskoppler 9 durch zeitgesteuertes Teilauskoppeln der verstärkten Eingangslaserpulse 5'₁, 5'₂, 5'₃ in Abhängigkeit ihrer bekannten Pulsabstände zum jeweils unmittelbar vorhergehenden, verstärkten Eingangs- oder Opferlaserpuls 5'₁, 5'₂, 5'₃, 12'. Je größer dieser Pulsabstand eines verstärkten Eingangslaserpulses 5'₁, 5'₂, 5'₃ ist, desto größer ist die im Verstärker 8 aufgebaute Inversion und desto größer ist die Pulsenergie des verstärkten Eingangslaserpulses 5'₁, 5'₂, 5'₃. Die drei verstärkten Ausgangslaserpulse 2₁, 2₂, 2₃ mit der gleichen Pulsenergie kommen zu den Zeitpunkten t₁, t₂, t₃ am Ausgang 3 an.

Werden am Ausgang 3 Ausgangslaserpulse 2₁, 2₂, 2₃ mit unterschiedlichen Pulsenergien angefordert, erfolgt eine entsprechende Energiereduzierung am Auskoppler 9 durch zeitgesteuertes Teilauskoppeln der verstärkten Eingangslaserpulse 5'₁, 5'₂, 5'₃ in Abhängigkeit ihrer bekannten Pulsabstände zum jeweils unmittelbar vorhergehenden, verstärkten Eingangs- oder Opferlaserpuls 5'₁, 5'₂, 5'₃, 12'.

Ist der Pulsabstand eines angeforderten Verstärkerpulses zum unmittelbar vorhergehenden Verstärkerpuls kleiner als die Mindestzeitspanne Tₘᵢₙ, so wird statt des eigentlich auszuwählenden Eingangslaserpulses ein anderer Eingangslaserpuls ausgewählt, dessen zeitlicher Pulsabstand zu dem unmittelbar vorhergehenden, ausgewählten Eingangslaserpuls gleich oder nächstkommend größer als die Mindestzeitspanne Tₘᵢₙ ist. Der Pulspicker 6 wird also zeitverzögert angesteuert, indem beispielsweise dem eigentlichen Auswahlsignal ein Verzögerungssignal überlagert wird und ein Eingangslaserpuls ausgewählt wird, dessen zeitlicher Pulsabstand gleich oder nächstkommend größer als die Mindestzeitspanne Tₘᵢₙ ist. Vorzugsweise werden alle die Eingangslaserpulse auswählenden, elektrischen Triggersignale von der Anwenderanforderung 11 mit einer Verzögerung Tₘᵢₙ beaufschlagt, so dass die Mindestzeitspanne Tₘᵢₙ für alle Triggersignale eingehalten wird und ggf. Opferpulse eingeführt werden können. D.h., alle Pulse sind mit einem festen Delay beaufschlagt. Die Mindestzeitspanne Tₘᵢₙ ist mindestens so lang, dass von der Steuereinheit 10 eine Bewertung, ob Opferpulse erforderlich sind, durchgeführt werden kann.

Die Steuereinheit 10 kann eine Vergleichseinheit **10a** aufweisen, welche die Pulsabstände ΔT₁, ΔT₂ der ausgewählten Eingangslaserpulse 5₁, 5₂, 5₃ mit der vorgegebenen Höchstzeitspanne Tₘₐₓ vergleicht und bei zu großem Pulsabstand ein Steuersignal an den Pulspicker 6 ausgibt, um einen Opferpuls 12 in die Pulsfolge der ausgewählten Eingangslaserpulse 5₁, 5₂, 5₃ einzufügen. Die Steuereinheit 10 kann weiterhin eine Bestimmungs- und Vergleichseinheit **10b** aufweisen, die für die ausgewählten Eingangslaserpulse 5₁, 5₂, 5₃ die zu erwartende Pulsenergie der verstärkten Ausgangslaserpulse 2₁, 2₂, 2₃ im Voraus bestimmt und mit der vorgegebenen Pulsenergie vergleicht und ein Steuersignal an den Auskoppler 9 ausgibt, um einen Ausgangslaserpuls 2₁, 2₂, 2₃ mit der vorgegebenen Pulsenergie auszukoppeln.

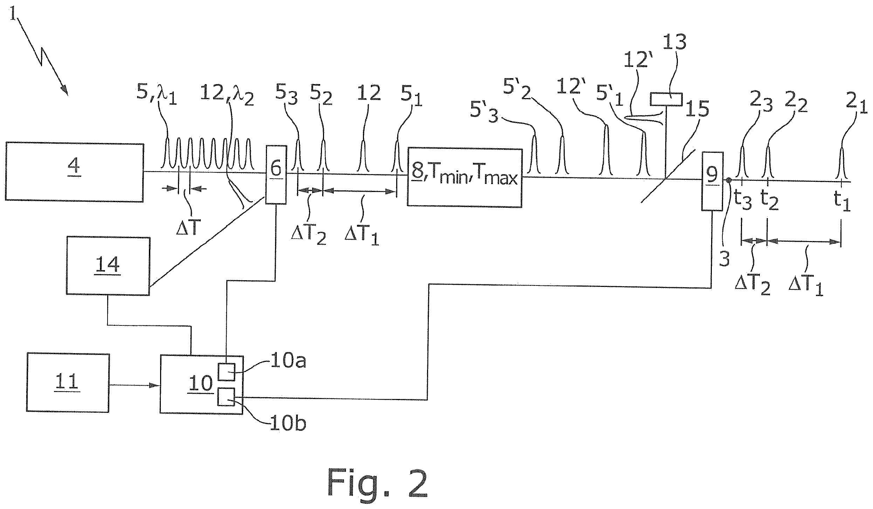

Vom Lasersystem der Fig. 1 unterscheidet sich das in **Fig. 2** gezeigte Lasersystem 1 dadurch, dass hier der Opferpuls 12 von einer von der Steuereinheit 10 angesteuerten Fremdpulsquelle (z.B. Laserdiode) **14** erzeugt wird. Der Opferpuls 12 kann die gleiche Wellenlänge **λ₁** wie die Eingangslaserpulse 5 oder aber wie in Fig. 2 eine andere Wellenlänge **λ₂** aufweisen. Der Opferpuls 12 wird von der Steuereinheit 10 in die Pulsfolge der ausgewählten Eingangslaserpulse 5₁, 5₂, 5₃ eingefügt, und der verstärkte Opferpuls 12' wird von einem dem Auskoppler 9 vorgeordneten wellenlängenselektiven Element **15** (z.B. dichroitischer Spiegel, diffraktives Element, VBG[Volume Bragg Grating]) ausgekoppelt und auf den Absorber 13 gelenkt. Anders als in Fig. 2 gezeigt, kann der verstärkte Opferpuls 12' auch mit einem der Pulse 5₁', 5₂', 5₃', überlappen.

Die beschriebenen Verfahren funktionieren allein durch die zeitliche Ansteuerung des Pulspickers 6 und des Auskopplers 9 durch die Steuereinheit 10, d.h., es wird nicht geregelt.

Den in Fign. 1 und 2 gezeigten Lasersystemen 1 können noch eine Regelung der Pumpleistung und eine Regelung der Pulsenergie der Eingangslaserpulse 5 überlagert sein.

## Patentansprüche

1. Verfahren zum Erzeugen verstärkter Ausgangslaserpulse (2₁, 2₂, 2₃) mit individuell vorgegebenen Pulsenergien zu individuell vorgegebenen Zeitpunkten (t₁, t₂, t₃) an einem Ausgang (3), mit folgenden Verfahrensschritten:
- Bereitstellen einer Pulsfolge von Eingangslaserpulsen (5) mit der gleichen Pulsenergie und insbesondere mit dem gleichen zeitlichen Pulsabstand (Δt), welcher kleiner als der zeitliche Pulsabstand (ΔT₁, ΔT₂) zwischen zwei benachbarten Ausgangslaserpulsen (2₁, 2₂, 2₃) ist;
- Auswählen derjenigen Eingangslaserpulse (5₁, 5₂, 5₃), die am Ausgang (3) jeweils zu den vorgegebenen Zeitpunkten (t₁, t₂, t₃) oder am nächsten zu den vorgegebenen Zeitpunkten (t₁, t₂, t₃) ankommen;
- Verstärken der ausgewählten Eingangslaserpulse (5₁, 5₂, 5₃) mittels eines optischen Verstärkers (8), der eine vorgegebene, verstärkungsfreie Mindestzeitspanne (Tₘᵢₙ) und eine vorgegebene, verstärkungsfreie Höchstzeitspanne (Tₘₐₓ) aufweist, wobei für den Fall, dass der zeitliche Pulsabstand (ΔT₁) zwischen zwei aufeinanderfolgenden, zu verstärkenden Eingangslaserpulsen (5₁, 5₂) größer als die Höchstzeitspanne (Tₘₐₓ) ist, vor dem nachfolgenden der beiden aufeinanderfolgenden, zu verstärkenden Eingangslaserpulse (5₁, 5₂) mindestens ein Opferlaserpuls (12), der von dem nachfolgenden, zu verstärkenden Eingangspuls (5₂) um mindestens die Mindestzeitspanne (Tₘᵢₙ) und um höchstens die Höchstzeitspanne (Tₘₐₓ) beabstandet ist, in die Pulsfolge der ausgewählten Eingangslaserpulse (5₁, 5₂, 5₃) eingefügt wird und wobei der mindestens eine verstärkte Opferlaserpuls (12') vor dem Ausgang (3) aus der Pulsfolge der verstärkten Eingangspulse (5'₁, 5'₂, 5'₃) ausgekoppelt wird; und
- Reduzieren der Pulsenergien der verstärkten Eingangslaserpulse (5'₁, 5'₂, 5'₃) auf die vorgegebenen Pulsenergien;
**dadurch gekennzeichnet,**
**dass** das Reduzieren der Pulsenergien der verstärkten Eingangslaserpulse (5'₁, 5'₂, 5'₃) durch zeitgesteuertes Teilauskoppeln in Abhängigkeit ihrer Pulsabstände zum jeweils unmittelbar vorhergehenden, verstärkten Eingangs- oder Opferlaserpuls (5'₁, 5'₂, 5'₃, 12') erfolgt.

2. Verfahren nach Anspruch 1, **dadurch gekennzeichnet, dass** für die ausgewählten Eingangslaserpulse (5₁, 5₂, 5₃) die zu erwartende Pulsenergie der verstärkten Ausgangslaserpulse (2₁, 2₂, 2₃) im Voraus bestimmt wird und die Teilauskopplung anhand eines Vergleichs der zu erwartenden Pulsenergie und der vorgegebenen Pulsenergie gesteuert wird.

3. Verfahren nach Anspruch 2, **dadurch gekennzeichnet, dass** die erwartete Pulsenergie aus dem simulierten Verhalten des Verstärkers (10) in Abhängigkeit von Pulsabstand und Pulsenergie der ausgewählten Eingangslaserpulse (5₁, 5₂, 5₃) und einer Pumpleistung des Verstärkers (8) bestimmt wird.

4. Verfahren nach einem der vorhergehenden Ansprüche, **dadurch gekennzeichnet, dass** alle verstärkten Ausgangslaserpulse (2₁, 2₂, 2₃) die gleiche Pulsenergie aufweisen.

5. Verfahren nach einem der vorhergehenden Ansprüche, **dadurch gekennzeichnet, dass** statt eines ausgewählten Eingangslaserpulses (5), dessen zeitlicher Pulsabstand zu dem unmittelbar vorhergehenden, ausgewählten Eingangslaserpuls kleiner als die Mindestzeitspanne (Tₘᵢₙ) ist, ein anderer Eingangslaserpuls (5) ausgewählt wird, dessen zeitlicher Pulsabstand zu dem unmittelbar vorhergehenden, ausgewählten Eingangslaserpuls (5) gleich oder nächstkommend größer als die Mindestzeitspanne (Tₘᵢₙ) ist.

6. Verfahren nach einem der vorhergehenden Ansprüche, **dadurch gekennzeichnet, dass** als Opferlaserpuls (12) einer der Eingangslaserpulse (5) in die Pulsfolge der ausgewählten Eingangslaserpulse (5₁, 5₂, 5₃) eingefügt wird.

7. Verfahren nach einem der Ansprüche 1 bis 5, **dadurch gekennzeichnet, dass** als Opferlaserpuls ein Fremdlaserpuls (12), der insbesondere eine andere Wellenlänge (λ₂) als die Wellenlänge (λ₁) der Eingangslaserpulse (5) aufweist, in die Pulsfolge der ausgewählten Eingangslaserpulse (5₁, 5₂, 5₃) eingefügt wird.

8. Verfahren nach einem der vorhergehenden Ansprüche, **dadurch gekennzeichnet, dass** der zeitliche Pulsabstand (ΔT₁, ΔT₂) zwischen zwei benachbarten Ausgangslaserpulsen (2₁, 2₂, 2₃) um mindestens eine Größenordnung größer als der zeitliche Pulsabstand (ΔT) der Eingangslaserpulse (5) ist.

9. Verfahren nach einem der vorhergehenden Ansprüche, **dadurch gekennzeichnet, dass** vor dem ersten ausgewählten Eingangslaserpuls (5₁) mindestens ein Opferlaserpuls (12) in die Pulsfolge der ausgewählten Eingangslaserpulse (5₁, 5₂, 5₃) eingefügt wird.

10. Verfahren nach einem der vorhergehenden Ansprüche, **dadurch gekennzeichnet, dass** das Reduzieren der Pulsenergien der verstärkten Eingangslaserpulse (5'₁, 5'₂, 5'₃) und das Auskoppeln des verstärkten Opferlaserpulses (12) an demselben optischen Auskoppler (9) erfolgen.

11. Lasersystem (1) zum Erzeugen verstärkter Ausgangslaserpulse (2₁, 2₂, 2₃) mit individuell vorgegebenen Pulsenergien zu individuell vorgegebenen Zeitpunkten (t₁, t₂, t₃) an einem Ausgang (3),
mit einer Pulsquelle (4) zum Erzeugen von Eingangslaserpulsen (5) mit der gleichen Pulsenergie und insbesondere dem gleichen zeitlichen Pulsabstand (Δt), welcher kleiner als der zeitliche Pulsabstand (ΔT₁, ΔT₂) zwischen zwei benachbarten Ausgangslaserpulsen (2₁, 2₂, 2₃) ist,
mit einer Auswahleinheit (6) zum Auswählen einiger der Eingangslasepulse (5),
mit einem optischen Verstärker (8) zum Verstärken der ausgewählten Eingangslaserpulse (5₁, 5₂, 5₃) und
mit einer Auskoppeleinheit (9) zum Auskoppeln zumindest eines Teils der verstärkten Laserpulse (5'₁, 5'₂, 5'₃),
**gekennzeichnet durch** eine Steuereinheit (10), die programmiert ist, die Auswahleinheit (6) und die Auskoppeleinheit (9) gemäß dem Verfahren nach einem der vorhergehenden Ansprüche zeitlich anzusteuern.

12. Lasersystem nach Anspruch 11, **gekennzeichnet durch** eine Fremdpulsquelle (14), insbesondere mit einer anderen Wellenlänge (λ₂) als die Pulsquelle (4), zum Erzeugen eines in die Pulsfolge der ausgewählten Eingangslaserpulse (5₁, 5₂, 5₃) einzufügenden Opferpulses (12).

13. Lasersystem nach Anspruch 11 oder 12, **dadurch gekennzeichnet, dass** die Auswahleinheit (6) und/oder die Auskoppeleinheit (9) einen AOM oder EOM aufweist.

14. Lasersystem nach einem der Ansprüche 11 bis 13, **dadurch gekennzeichnet, dass** der Auskoppeleinheit (9) ein wellenlängenselektives Element (15) zum Auskoppeln von Laserlicht mit einer anderen Wellenlänge (λ₂) als die Pulsquelle (4) vorgeordnet oder nachgeordnet ist.

15. Steuerungsprogrammprodukt, welches Codemittel aufweist, die zum Durchführen aller Schritte des Verfahrens nach einem der Ansprüche 1 bis 10 angepasst sind, wenn das Programm auf einer Steuereinheit (10) eines Lasersystems (1) nach einem der Ansprüche 11-14 abläuft.

## Claims

1. A method for generating amplified output laser pulses (2₁, 2₂, 2₃) with individually specified pulse energies at individually specified time points (t₁, t₂, t₃) at an output (3), comprising the following method steps:
- providing a pulse sequence of input laser pulses (5) with the same pulse energy and in particular with the same temporal pulse distance (Δt), which is smaller than the temporal pulse distance (ΔT₁, ΔT₂) between two neighboring output laser pulses (2₁, 2₂, 2₃);
- selecting the input laser pulses (5₁, 5₂, 5₃) that arrive at the output (3) in each case at the specified time points (t₁, t₂, t₃) or closest to the specified time points (t₁, t₂, t₃);
- amplifying the selected input laser pulses (5₁, 5₂, 5₃) using an optical amplifier (8) having a specified, amplification-free minimum time period (Tₘᵢₙ) and a specified, amplification-free maximum time period (Tₘₐₓ), wherein, for the case that the temporal pulse distance (ΔT₁) between two successive input laser pulses (5₁, 5₂) that are to be amplified is greater than the maximum time period (Tₘₐₓ), at least one sacrificial laser pulse (12), which is spaced apart from the subsequent input pulse (5₂) that is to be amplified by at least the minimum time period (Tₘᵢₙ) and by at most the maximum time period (Tₘₐₓ), is inserted, before the subsequent one of the two successive input laser pulses (5₁, 5₂) that are to be amplified, into the pulse sequence of the selected input laser pulses (5₁, 5₂, 5₃) and wherein the at least one amplified sacrificial laser pulse (12') is coupled out of the pulse sequence of the amplified input pulses (5'₁, 5'₂, 5'₃) upstream of the output (3); and
- reducing the pulse energies of the amplified input laser pulses (5'₁, 5'₂, 5'₃) to the specified pulse energies, **characterized in that** the reduction of the pulse energies of the amplified input laser pulses (5'₁, 5'₂, 5'₃) is realized by way of timed partial output coupling in dependence on their pulse distances from the respectively immediately preceding, amplified input or sacrificial laser pulse (5'₁, 5'₂, 5'₃, 12').

2. The method as claimed in claim 1, **characterized in that** the expected pulse energy of the amplified output laser pulses (2₁, 2₂, 2₃) is determined in advance for the selected input laser pulses (5₁, 5₂, 5₃), and the partial output coupling is controlled on the basis of a comparison of the expected pulse energy to the specified pulse energy.

3. The method as claimed in claim 2, **characterized in that** the expected pulse energy is determined from the simulated behavior of the amplifier (10) in dependence on the pulse distance and pulse energy of the selected input laser pulses (5₁, 5₂, 5₃) and a pump power of the amplifier (8).

4. The method as claimed in one of the preceding claims, **characterized in that** all the amplified output laser pulses (2₁, 2₂, 2₃) have the same pulse energy.

5. The method as claimed in one of the preceding claims, **characterized in that**, instead of a selected input laser pulse (5), the temporal pulse distance of which from the immediately preceding, selected input laser pulse is smaller than the minimum time period (Tₘᵢₙ), a different input laser pulse (5) is selected, the temporal pulse distance of which from the immediately preceding, selected input laser pulse (5) is identical to or minimally greater than the minimum time period (Tₘᵢₙ).

6. The method as claimed in one of the preceding claims, **characterized in that** one of the input laser pulses (5) is inserted into the pulse sequence of the selected input laser pulses (5₁, 5₂, 5₃) as a sacrificial laser pulse (12).

7. The method as claimed in one of claims 1 to 5, **characterized in that** an external laser pulse (12) having in particular a different wavelength (λ₂) than the wavelength (λ₁) of the input laser pulses (5) is inserted into the pulse sequence of the selected input laser pulses (5₁, 5₂, 5₃) as a sacrificial laser pulse.

8. The method as claimed in one of the preceding claims, **characterized in that** the temporal pulse distance (ΔT₁, ΔT₂) between two neighboring output laser pulses (2₁, 2₂, 2₃) is greater by at least one order of magnitude than the temporal pulse distance (ΔT) of the input laser pulses (5).

9. The method as claimed in one of the preceding claims, **characterized in that** at least one sacrificial laser pulse (12) is inserted into the pulse sequence of the selected input laser pulses (5₁, 5₂, 5₃) before the first selected input laser pulse (5₁).

10. The method as claimed in one of the preceding claims, **characterized in that** reducing the pulse energies of the amplified input laser pulses (5'₁, 5'₂, 5'₃) and the output coupling of the amplified sacrificial laser pulse (12) are effected at the same optical output coupler (9).

11. A laser system (1) for generating amplified output laser pulses (2₁, 2₂, 2₃) with individually specified pulse energies at individually specified time points (t₁, t₂, t₃) at an output (3), comprising
a pulse source (4) for generating input laser pulses (5) with the same pulse energy and in particular with the same temporal pulse distance (Δt), which is smaller than the temporal pulse distance (ΔT₁, ΔT₂) between two neighboring output laser pulses (2₁, 2₂, 2₃),
a selection unit (6) for selecting some of the input laser pulses (5),
an optical amplifier (8) for amplifying the selected input laser pulses (5₁, 5₂, 5₃), and
an output coupling unit (9) for coupling out at least one portion of the amplified laser pulses (5'₁, 5'₂, 5'₃),
**characterized by** a control unit (10), which is programmed to temporally drive the selection unit (6) and the output coupling unit (9) according to the method as claimed in one of the preceding claims.

12. The laser system as claimed in claim 11, **characterized by** an external pulse source (14), in particular having a different wavelength (λ₂) than the pulse source (4), for generating a sacrificial pulse (12) that is to be inserted into the pulse sequence of the selected input laser pulses (5₁, 5₂, 5₃).

13. The laser system as claimed in claim 11 or 12, **characterized in that** the selection unit (6) and/or the output coupling unit (9) has an AOM or an EOM.

14. The laser system as claimed in one of claims 11 to 13, **characterized in that** a wavelength-selective element (15) for coupling out laser light having a different wavelength (λ₂) than the pulse source (4) is arranged upstream or downstream of the output coupling unit (9).

15. A control program product having code means adapted to carry out all the steps of the method as claimed in one of claims 1 to 10 when the program is executed on a control unit (10) of a laser system (1) as claimed in one of the claims 11 to 14.

## Revendications

1. Procédé pour générer des impulsions laser de sortie amplifiées (2₁, 2₂, 2₃) avec des énergies d'impulsion prédéfinies individuellement à des instants prédéfinis individuellement (t₁, t₂, t₃) à une sortie (3), comprenant les étapes de procédé suivantes :
- fourniture d'une séquence d'impulsions laser d'entrée (5) ayant la même énergie d'impulsion et en particulier le même intervalle de temps inter-impulsions (Δt), qui est inférieur à l'intervalle de temps inter-impulsions (ΔT₁, ΔT₂) entre deux impulsions laser de sortie voisines (2₁, 2₂, 2₃) ;
- sélection des impulsions laser d'entrée (5₁, 5₂, 5₃) qui arrivent à la sortie (3) aux instants prédéfinis respectifs (t₁, t₂, t₃) ou au plus proche des instants prédéfinis (t₁, t₂, t₃) ;
- amplification des impulsions laser d'entrée sélectionnées (5₁, 5₂, 5₃) au moyen d'un amplificateur optique (8) qui présente un laps de temps minimal sans amplification prédéfini (Tₘᵢₙ) et un laps de temps maximal sans amplification prédéfini (Tₘₐₓ), dans lequel, dans le cas où l'intervalle de temps inter-impulsions (ΔT₁) entre deux impulsions laser d'entrée successives à amplifier (5₁, 5₂) est supérieur au laps de temps maximal (Tₘₐₓ), au moins une impulsion laser sacrificielle (12) qui est espacée de l'impulsion laser d'entrée suivante à amplifier (5₂) d'au moins le laps de temps minimal (Tₘᵢₙ) et d'au plus le laps de temps maximal (Tₘₐₓ), est insérée dans la séquence d'impulsions des impulsions laser d'entrée sélectionnées (5₁, 5₂, 5₃) avant l'impulsion suivante des deux impulsions laser d'entrée successives à amplifier (5₁, 5₂), et dans lequel ladite au moins une impulsion laser sacrificielle amplifiée (12') est découplée avant la sortie (3) de la séquence d'impulsions des impulsions d'entrée amplifiées (5'₁, 5'₂, 5'₃) ; et
- réduction des énergies d'impulsion des impulsions laser d'entrée amplifiées (5'₁, 5'₂, 5'₃) aux énergies d'impulsion prédéfinies ;
**caractérisé en ce**
**que** la réduction des énergies d'impulsion des impulsions laser d'entrée amplifiées (5'₁, 5'₂, 5'₃) est effectuée par découplage partiel commandé dans le temps en fonction de leurs intervalles inter-impulsions par rapport à l'impulsion laser d'entrée ou sacrificielle amplifiée (5'₁, 5'₂, 5'₃, 12') immédiatement précédente respective.

2. Procédé selon la revendication 1, **caractérisé en ce que** pour les impulsions laser d'entrée sélectionnées (5₁, 5₂, 5₃), l'énergie d'impulsion à attendre des impulsions laser de sortie amplifiées (2₁, 2₂, 2₃) est déterminée à l'avance et le découplage partiel est commandé sur la base d'une comparaison de l'énergie d'impulsion à attendre et de l'énergie d'impulsion prédéfinie.

3. Procédé selon la revendication 2, **caractérisé en ce que** l'énergie d'impulsion attendue est déterminée à partir du comportement simulé de l'amplificateur (10) en fonction de l'intervalle inter-impulsions, de l'énergie d'impulsion des impulsions laser d'entrée sélectionnées (5₁, 5₂, 5₃) et d'une puissance de pompage de l'amplificateur (8).

4. Procédé selon l'une des revendications précédentes, **caractérisé en ce que** toutes les impulsions laser de sortie amplifiées (2₁, 2₂, 2₃) présentent la même énergie d'impulsion.

5. Procédé selon l'une des revendications précédentes, **caractérisé en ce qu'**au lieu d'une impulsion laser d'entrée sélectionnée (5) dont l'intervalle de temps inter-impulsions par rapport à l'impulsion laser d'entrée sélectionnée immédiatement précédente est inférieur au laps de temps minimal (Tₘᵢₙ), une autre impulsion laser d'entrée (5) est sélectionnée, dont l'intervalle de temps inter-impulsions par rapport à l'impulsion laser d'entrée sélectionnée immédiatement précédente (5) est égal ou le plus proche supérieur au laps de temps minimal (Tₘᵢₙ).

6. Procédé selon l'une des revendications précédentes, **caractérisé en ce que** l'une des impulsions laser d'entrée (5) est insérée en tant qu'impulsion laser sacrificielle (12) dans la séquence d'impulsions des impulsions laser d'entrée sélectionnées (5₁, 5₂, 5₃).

7. Procédé selon l'une des revendications 1 à 5, **caractérisé en ce qu'**une impulsion laser sacrificielle (12), qui présente en particulier une longueur d'onde (λ₂) différente de la longueur d'onde (λ₁) des impulsions laser d'entrée (5), est insérée en tant qu'impulsion laser sacrificielle dans la séquence d'impulsions des impulsions laser d'entrée sélectionnées (5₁, 5₂, 5₃).

8. Procédé selon l'une des revendications précédentes, **caractérisé en ce que** l'intervalle de temps inter-impulsions (ΔT₁, ΔT₂) entre deux impulsions laser de sortie voisines (2₁, 2₂, 2₃) est supérieur d'au moins un ordre de grandeur à l'intervalle de temps inter-impulsions (ΔT) des impulsions laser d'entrée (5).

9. Procédé selon l'une des revendications précédentes, **caractérisé en ce qu'**au moins une impulsion laser sacrificielle (12) est insérée dans la séquence d'impulsions des impulsions laser d'entrée sélectionnées (5₁, 5₂, 5₃) avant la première impulsion laser d'entrée sélectionnée (5₁).

10. Procédé selon l'une des revendications précédentes, **caractérisé en ce que** la réduction des énergies d'impulsion des impulsions laser d'entrée amplifiées (5'₁, 5'₂, 5'₃) et le découplage de l'impulsion laser sacrificielle amplifiée (12) sont effectués sur le même découpleur optique (9).

11. Système laser (1) pour générer des impulsions laser de sortie amplifiées (2₁, 2₂, 2₃) avec des énergies d'impulsion prédéfinies individuellement à des instants prédéfinis individuellement (t₁, t₂, t₃) à une sortie (3),
comprenant une source d'impulsions (4) pour générer des impulsions laser d'entrée (5) ayant la même énergie d'impulsion et en particulier le même intervalle de temps inter-impulsions (Δt), qui est inférieur à l'intervalle de temps inter-impulsions (ΔT₁, ΔT₂) entre deux impulsions laser de sortie voisines (2₁, 2₂, 2₃),
comprenant une unité de sélection (6) pour sélectionner certaines des impulsions laser d'entrée (5),
comprenant un amplificateur optique (8) pour amplifier les impulsions laser d'entrée sélectionnées (5₁, 5₂, 5₃) et
comprenant une unité de découplage (9) pour découpler au moins une partie des impulsions laser amplifiées (5'₁, 5'₂, 5'₃),
**caractérisé par** une unité de commande (10) qui est programmée pour commander dans le temps l'unité de sélection (6) et l'unité de découplage (9) conformément au procédé selon l'une des revendications précédentes.

12. Système laser selon la revendication 11, **caractérisé par** une source d'impulsions externe (14), ayant en particulier une longueur d'onde (λ₂) différente de celle de la source d'impulsions (4), pour générer une impulsion sacrificielle (12) à insérer dans la séquence d'impulsions des impulsions laser d'entrée sélectionnées (5₁, 5₂, 5₃).

13. Système laser selon la revendication 11 ou 12, **caractérisé en ce que** l'unité de sélection (6) et/ou l'unité de découplage (9) présentent une AOM ou une EOM.

14. Système laser selon l'une des revendications 11 à 13, **caractérisé en ce qu'**un élément sélectif en longueur d'onde (15) pour le découplage de la lumière laser ayant une longueur d'onde (λ₂) différente de celle de la source d'impulsion (4) est disposé en amont ou en aval de l'unité de découplage (9).

15. Produit programme de commande qui présente des moyens de code adaptés à mettre en œuvre toutes les étapes du procédé selon l'une des revendications 1 à 10 lorsque le programme s'exécute sur une unité de commande (10) d'un système laser (1) selon l'une des revendications 11 à 14.
